(19) Europäisches Patentamt
European Patent Office
Office européen des brevets

(11) **EP 3 940 002 A1**

(12) **EUROPEAN PATENT APPLICATION**
published in accordance with Art. 153(4) EPC

(43) Date of publication:
**19.01.2022 Bulletin 2022/03**

(21) Application number: **20773730.5**

(22) Date of filing: **11.03.2020**

(51) International Patent Classification (IPC):
*C08C 2/06* (2006.01)   *C08F 279/02* (2006.01)
*C09J 11/06* (2006.01)   *C08K 5/29* (2006.01)
*C08L 11/02* (2006.01)   *C08L 51/06* (2006.01)
*C08L 101/00* (2006.01)   *C09J 111/02* (2006.01)
*C09J 151/06* (2006.01)

(52) Cooperative Patent Classification (CPC):
**C08C 2/06; C08F 279/02; C08K 5/29; C08L 11/02;
C08L 51/06; C08L 101/00; C09J 11/06;
C09J 111/02; C09J 151/06**

(86) International application number:
**PCT/JP2020/010650**

(87) International publication number:
**WO 2020/189456 (24.09.2020 Gazette 2020/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.03.2019 JP 2019048129**

(71) Applicant: **Denka Company Limited
Tokyo 103-8338 (JP)**

(72) Inventors:
• **OGUSHI, Hajime**
  **Tokyo 103-8338 (JP)**
• **ONOZUKA, Masao**
  **Tokyo 103-8338 (JP)**
• **KOBAYASHI, Naoki**
  **Tokyo 103-8338 (JP)**
• **ANDO, Ryotaro**
  **Tokyo 103-8338 (JP)**

(74) Representative: **Hoffmann Eitle
Patent- und Rechtsanwälte PartmbB
Arabellastraße 30
81925 München (DE)**

(54) **RUBBER LATEX AND WATER-BASED ADHESIVE COMPOSITION**

(57)   A rubber latex containing: a graft copolymer; and a surfactant, in which the graft copolymer has a chloroprene polymer chain and a graft chain bonded to the chloroprene polymer chain, the graft chain includes a structural unit derived from an ethylenically unsaturated carboxylic acid, and a molar ratio of a content of oxygen atom with respect to a content of chlorine atom in the graft copolymer is 0.04 to 1.

**EP 3 940 002 A1**

## Description

### Technical Field

The present invention relates to a rubber latex and a water-based adhesive composition.

### Background Art

Regarding an adhesive based on a chloroprene polymer (hereinafter, referred to as "polychloroprene" in some cases), a solvent-based adhesive obtained by dissolving a chloroprene rubber in an organic solvent has been mainstream. However, regarding the solvent-based adhesive, concern of risk of fire and environmental contamination caused by the organic solvent at the time of producing or using the solvent-based adhesive has been raised, and a demand for not using a solvent is increasing. As a means for not using a solvent, a method of replacing with a water-based adhesive based on a chloroprene polymer latex is effective.

As the water-based adhesive based on a chloroprene polymer latex, for example, a two-component type water-based adhesive in which an aqueous polyurethane resin having a cross-linking density of 0.02 to 1.00 per 1000 atomic weight is blended with respect to a chloroprene polymer latex and an aziridine-based, carbodiimide-based, or blocked isocyanate-based cross-linking agent is further used has been known (see Patent Literature 1 below).

Furthermore, a two-component type water-based adhesive in which a liquid polychloroprene and an aqueous polyurethane resin are blended and used as a main agent, and a water-dispersible isocyanate compound is used as a curing agent (see Patent Literature 2 below), a water-based adhesive in which an aqueous polyurethane emulsion obtained by reaction of a specific isocyanate compound, polyol, a chain extender, and a carboxylic acid-containing low-molecular-weight polyol, and a polychloroprene latex are blended (see Patent Literature 3 below), and the like have been known.

Further, an adhesion method using a water-based primer composed of a chloroprene-based rubber latex, an olefin-based resin emulsion, a polyurethane latex, and a tackifier resin has been known (see Patent Literature 4 below).

### Citation List

### Patent Literature

Patent Literature 1: Japanese Unexamined Patent Publication No. H2-127491
Patent Literature 2: Japanese Unexamined Patent Publication No. H4-323292
Patent Literature 3: Japanese Unexamined Patent Publication No. H10-273587
Patent Literature 4: Japanese Unexamined Patent Publication No. H5-320601

### Summary of Invention

### Technical Problem

In these conventional water-based adhesives or adhesion method, an initial adhesive strength in adhesion between members configured by a vinyl chloride resin is insufficient.

An object of an aspect of the present invention is to provide a rubber latex capable of obtaining an excellent initial adhesive strength in adhesion between members configured by a vinyl chloride resin. An object of another aspect of the present invention is to provide a water-based adhesive composition containing the above-described rubber latex.

### Solution to Problem

The present inventors have conducted intensive studies, and as a result, have found that the above-described problems can be solved by a rubber latex containing: a graft copolymer obtained by grafting an ethylenically unsaturated carboxylic acid to a chloroprene polymer; and a surfactant, in which a molar ratio of a content of oxygen atom with respect to a content of chlorine atom in the graft copolymer is 0.04 to 1, thereby completing the present invention.

An aspect of the present invention provides a rubber latex containing: a graft copolymer; and a surfactant, in which the graft copolymer has a chloroprene polymer chain and a graft chain bonded to the chloroprene polymer chain, the graft chain includes a structural unit derived from an ethylenically unsaturated carboxylic acid, and a molar ratio of a content of oxygen atom with respect to a content of chlorine atom in the graft copolymer is 0.04 to 1.

Another aspect of the present invention provides a water-based adhesive composition containing the aforementioned rubber latex.

**Advantageous Effects of Invention**

According to an aspect of the present invention, it is possible to provide a rubber latex capable of obtaining an excellent initial adhesive strength in adhesion between members configured by a vinyl chloride resin. According to another aspect of the present invention, it is possible to provide a water-based adhesive composition containing the above-described rubber latex.

**Description of Embodiments**

Hereinafter, the content of the present invention will be specifically described. Embodiments described below are only typical exemplary embodiments of the present invention and the scope of the present invention is not restricted by these at all.

In the present specification, a numerical range that has been indicated by use of "to" indicates the range that includes the numerical values which are described before and after "to", as the minimum value and the maximum value, respectively. "A or more" of the numerical range means a range of A and more than A. "A or less" of the numerical range means a range of A and less than A. In the numerical ranges that are described stepwise in the present specification, the upper limit value or the lower limit value of the numerical range of a certain stage can be arbitrarily combined with the upper limit value or the lower limit value of the numerical range of another stage. In the numerical ranges that are described in the present specification, the upper limit value or the lower limit value of the numerical value range may be replaced with the value shown in Examples. "A or B" may include any one of A and B, and may also include both of A and B. Materials listed as examples in the present specification may be used singly or in combinations of two or more kinds thereof, unless otherwise specified. In a case where a plurality of substances corresponding to each component exist in the composition, the content of each component in the composition means the total amount of the plurality of substances that exist in the composition, unless otherwise specified. A "(meth)acrylic acid" means at least one of acrylic acids and corresponding methacrylic acids. The same applies also to other similar expressions such as "(meth)acrylate".

<Rubber latex>

A rubber latex of the present embodiment contains: a graft copolymer; and a surfactant, in which the graft copolymer has a chloroprene polymer chain (polychloroprene chain) and a graft chain bonded to the chloroprene polymer chain, the graft chain includes a structural unit derived from an ethylenically unsaturated carboxylic acid (an ethylene-based unsaturated carboxylic acid), and a molar ratio of a content of oxygen atom with respect to a content of chlorine atom in the graft copolymer is 0.04 to 1.

According to the rubber latex of the present embodiment, an excellent initial adhesive strength (initial adhesive force) in adhesion between members configured by a vinyl chloride resin can be obtained. Since the rubber latex of the present embodiment has a double bond of a chloroprene polymer in a chloroprene polymer chain and a carboxy group derived from an ethylenically unsaturated carboxylic acid in the molecule, the rubber latex can be suitably used in adhesion of various members. The rubber latex of the present embodiment can be used directly as an adhesive. The rubber latex of the present embodiment may not contain an organic solvent, and can be used as a water-based adhesive (water-based adhesive composition).

According to the rubber latex of the present embodiment, in adhesion between members configured by a vinyl chloride resin, an excellent normal-state adhesive strength (normal-state adhesive force) can be obtained while obtaining an excellent initial adhesive strength. The "normal-state adhesive strength" is an adhesive strength after members are pressure-bonded and then maintained under an atmosphere at 23°C and 50% RH for 5 days. According to the rubber latex of the present embodiment, these adhesive strengths can be obtained without a primer treatment operation or the like being necessary, and adhesion conditions are hardly limited. The rubber latex of the present embodiment can be suitably used in adhesion between members configured by a natural rubber and/or in adhesion between a member configured by a vinyl chloride resin and a member configured by a natural rubber. The rubber latex of the present embodiment may be used in adhesion between members configured by nylon and adhesion between a member configured by nylon and another member.

(Graft copolymer)

The graft copolymer has a chloroprene polymer chain (polychloroprene chain) and a graft chain bonded to the chloroprene polymer chain and including a structural unit derived from an ethylenically unsaturated carboxylic acid. The

3

chloroprene polymer chain is a trunk polymer with respect to the graft chain and may be a main chain of the graft copolymer.

A graft copolymer can be obtained by grafting (graft polymerizing) an ethylenically unsaturated carboxylic acid to a chloroprene polymer (polychloroprene). That is, a method for producing a graft copolymer includes a graft polymerization step of grafting (graft polymerizing) an ethylenically unsaturated carboxylic acid to a chloroprene polymer. The method for producing a graft copolymer may include a chloroprene polymerization step of polymerizing chloroprene to obtain a chloroprene polymer, and in the chloroprene polymerization step, chloroprene and other monomers copolymerizable with chloroprene may be polymerized (copolymerized).

(Chloroprene polymer)

The chloroprene polymer (polychloroprene) of the chloroprene polymer chain has a structural unit derived from chloroprene (2-chloro-1,3-butadiene). The chloroprene polymer is a chloroprene homopolymer, a copolymer of chloroprene and other monomer copolymerizable with chloroprene, or a mixture of these polymers. The chloroprene polymer may be a chloroprene latex.

The content of the structural unit derived from chloroprene is preferably 50% by mass or more, 70% by mass or more, 90% by mass or more, 95% by mass or more, 98% by mass or more, or 99% by mass or more, on the basis of the whole chloroprene polymer, from the viewpoint of easily obtaining an excellent normal-state adhesive strength while obtaining an excellent initial adhesive strength. The chloroprene polymer may be an embodiment composed of the structural unit derived from chloroprene (an embodiment in which substantially 100% by mass of the chloroprene polymer is the structural unit derived from chloroprene).

Examples of the monomer copolymerizable with chloroprene include esters of (meth)acrylic acid (such as methyl (meth)acrylate, butyl (meth)acrylate, and 2-ethylhexyl (meth)acrylate), hydroxy (meth)acrylates (such as 2-hydroxyethyl (meth)acrylate, 2-hydroxymethyl (meth)acrylate, and 2-hydroxypropyl (meth)acrylate), 2,3-dichloro-1,3-butadiene, 1-chloro-1,3-butadiene, butadiene, isoprene, ethylene, styrene, and acrylonitrile.

In the case of using the copolymer of chloroprene and other monomer copolymerizable with chloroprene, as the chloroprene polymer, the copolymerized amount of the other monomer is preferably 50 parts by mass or less and more preferably 30 parts by mass or less with respect to 100 parts by mass of chloroprene. By adjusting the copolymerized amount of the other monomer in these ranges, an effect obtained by copolymerizing these monomers is likely to be exhibited without impairing properties of the rubber latex (for example, the water-based adhesive composition).

The other monomer copolymerizable with chloroprene are not limited to one kind, and, for example, three or more kinds of monomers containing chloroprene may be copolymerized. The polymer structure of the chloroprene polymer is not particularly limited. The chloroprene polymer may be a mercaptan-modified chloroprene polymer, a xanthogen-modified chloroprene polymer, a sulfur-modified chloroprene polymer, a dithiocarbonate-based chloroprene polymer, a trithiocarbonate-based chloroprene polymer, a carbamate-based chloroprene polymer, or the like.

The chloroprene polymer can be obtained, for example, by emulsion polymerization of a raw material monomer containing chloroprene as a main component in the presence of a polymerization reaction catalyst, a catalyst-activating agent, a polymerization initiator, a chain transfer agent, or the like. Rosin or the like may be used as an emulsifying dispersant when the chloroprene polymer is obtained.

Examples of the polymerization reaction catalyst include organic peroxides such as ketone peroxides, peroxy ketals, hydroperoxides (such as t-butyl hydroperoxide), dialkyl peroxides, and diacyl peroxides.

Examples of the catalyst-activating agent include sodium sulfite, sodium bisulfite, potassium sulfite, iron (II) oxide, anthraquinone, sodium β-sulfonate, formamidine sulfonic acid, and L-ascorbic acid.

A polymerization initiator is not particularly limited, and it is possible to use a known polymerization initiator which is generally used in the emulsion polymerization of the chloroprene monomer. Examples of the polymerization initiator include inorganic peroxides (such as potassium persulfate, ammonium persulfate, and sodium persulfate), and hydrogen peroxide.

The chain transfer agent is not particularly limited, and it is possible to use a chain transfer agent which is commonly used in emulsion polymerization of chloroprene. Examples of the chain transfer agent include long chain alkylmercaptans such as n-dodecylmercaptan (also known as 1-dodecanethiol), t-dodecylmercaptan, and n-octylmercaptan; xanthogen compounds such as diisopropylxanthogen disulfide and diethylxanthogen disulfide; iodoform; and thiocarbonyl compounds such as benzyl 1-pyrroldithiocarbamate (also known as benzyl 1-pyrrolcarbodithioate), benzylphenyl carbodithioate, 1-benzyl-N,N-dimethyl-4-aminodithiobenzoate, 1-benzyl-4-methoxydithiobenzoate, 1-phenylethylimidazole dithiocarbamate (also known as 1-phenylethylimidazole carbodithioate), benzyl-1-(2-pyrrolidinone)dithiocarbamate (also known as benzyl-1-(2-pyrrolidinone)carbodithioate), benzylphthalimidyl dithiocarbamate (also known as benzylphthalimidyl carbodithioate), 2-cyanoprop-2-yl-1-pyrroldithiocarbamate (also known as 2-cyanoprop-2-yl-1-pyrrolcarbodithioate), 2-cyanobut-2-yl-1-pyrroldithiocarbamate (also known as 2-cyanobut-2-yl-1-pyrrolcarbodithioate), benzyl-1-imidazole dithiocarbamate (also known as benzyl-1-imidazole carbodithioate), 2-cyanoprop-2-yl-N,N-dimethyl dithiocarbamate, benzyl-N,N-diethyl dithiocarbamate, cyanomethyl-1-(2-pyrrolidone)dithiocarbamate, 2-(ethoxycarbonylbenzyl)prop-2-yl-N,N-diethyl dithiocarbamate, 1-phenyl ethyl dithiobenzoate, 2-phenylprop-2-yldithiobenzoate, 1-aceto-1-yl-ethyl dithiobenzoate, 1-(4-methoxyphenyl)ethyl dithiobenzoate, benzyl dithioacetate, ethoxycarbonylmethyl dithioacetate, 2-(ethoxycarbonyl)prop-2-yldithiobenzoate, 2-cyanoprop-2-yldithiobenzoate, t-butyl dithiobenzoate, 2,4,4-trimethylpenta-2-yldithiobenzoate, 2-(4-chlorophenyl)-prop-2-yldithiobenzoate, 3-vinylbenzyl dithiobenzoate, 4-vinylbenzyl dithiobenzoate, benzyl diethoxyphosphinyl dithioformate, t-butyltrithioperbenzoate, 2-phenylprop-2-yl-4-chlorodithiobenzoate, naphthalene-1-carboxylic acid-1-methyl-1-phenyl-ethyl ester, 4-cyano-4-methyl-4-thiobenzyl sulfanyl butyric acid, dibenzyl tetrathioterephthalate, carboxymethyl dithiobenzoate, poly(ethylene oxide) having dithiobenzoate terminal, poly(ethylene oxide) having 4-cyano-4-methyl-4-thiobenzylsulfanyl butyrate terminal, 2-[(2-phenylethanethioyl)sulfanyl]propanoic acid, 2-[(2-phenylethanethioyl)sulfanyl]succinic acid, potassium 3,5-dimethyl-1H-pyrazol-1-carbodithioate, cyanomethyl-3,5-dimethyl-1H-pyrazol-1-carbodithioate, cyanomethyl methyl-(phenyl)dithiocarbamate, benzyl-4-chlorodithiobenzoate, phenyl methyl-4-chlorodithiobenzoate, 4-nitrobenzyl-4-chlorodithiobenzoate, phenyl prop-2-yl-4-chlorodithiobenzoate, 1-cyano-1-methyl ethyl-4-chlorodithiobenzoate, 3-chloro-2-butenyl-4-chlorodithiobenzoate, 2-chloro-2-butenyl dithiobenzoate, benzyl dithioacetate, 3-chloro-2-butenyl-1H-pyrrol-1-dithiocarboxylic acid, 2-cyanobutane-2-yl-4-chloro-3,5-dimethyl-1H-pyrazol-1-carbodithioate, cyanomethyl methyl(phenyl)carbodithioate, 2-cyano-2-propyldodecyl trithiocarbonate, dibenzyl trithiocarbonate, butylbenzyl trithiocarbonate, 2-[[(butylthio)thioxomethyl]thio] propionic acid, 2-[[(dodecylthio)thioxomethyl]thio] propionic acid, 2-[[(butylthio)thioxomethyl]thio]succinic acid, 2-[[(dodecylthio)thioxomethyl]thio]succinic acid, 2-[[(dodecylthio)thioxomethyl]thio]-2-methyl propionic acid, 2,2'-[carbonothioylbis(thio)]bis[2-methyl propionic acid], 2-amino-1-methyl-2-oxoethylbutyl trithiocarbonate, benzyl-2-[(2-hydroxyethyl)amino]-1-methyl-2-oxoethyl trithiocarbonate, 3-[[[(t-butyl)thio]thioxomethyl]thio] propionic acid, cyanomethyldodecyl trithiocarbonate, diethylaminobenzyl trithiocarbonate, and dibutylaminobenzyl trithiocarbonate.

The polymerization temperature is not particularly limited, and the polymerization temperature may be a temperature at which emulsion polymerization is generally performed, and is preferably in a range of 0°C to 50°C and more preferably in a range of 10°C to 50°C. The final polymerization rate of the chloroprene polymer obtained in the aforementioned chloroprene polymerization step is not particularly limited, and it is preferable to arbitrarily adjust within a range of 30 to 100%. In order to adjust the final conversion rate, when the conversion rate becomes a desired value, a polymerization terminator for terminating the polymerization reaction may be added to terminate the polymerization.

The polymerization terminator is not particularly limited, and it is possible to use a polymerization terminator which is commonly used. Examples of the polymerization terminator include thiodiphenylamine, 4-t-butylcatechol, and 2,2-methylenebis-4-methyl-6-t-butyl phenol.

The graft copolymer may be a graft copolymer obtained by grafting a monomer including an ethylenically unsaturated carboxylic acid as a main component to a chloroprene polymer. The graft copolymer may have a graft chain in which a content of the structural unit derived from an ethylenically unsaturated carboxylic acid is in the following range. The content of the structural unit derived from an ethylenically unsaturated carboxylic acid is preferably 50% by mass or more, 70% by mass or more, 90% by mass or more, 95% by mass or more, 98% by mass or more, or 99% by mass or more, on the basis of the whole graft chain, from the viewpoint of easily obtaining an excellent normal-state adhesive strength while obtaining an excellent initial adhesive strength. The graft chain may be an embodiment composed of the structural unit derived from an ethylenically unsaturated carboxylic acid (an embodiment in which substantially 100% by mass of the graft chain is the structural unit derived from an ethylenically unsaturated carboxylic acid). The graft chain may not have a structural unit derived from chloroprene.

Examples of the ethylenically unsaturated carboxylic acid to be grafted to the chloroprene polymer include acrylic acid, methacrylic acid, maleic acid, itaconic acid, and crotonic acid. The ethylenically unsaturated carboxylic acid is not limited to one kind, and two kinds or more thereof can also be used in combination. The ethylenically unsaturated carboxylic acid preferably includes at least one selected from the group consisting of acrylic acid and methacrylic acid, from the viewpoint of easily obtaining an excellent normal-state adhesive strength while obtaining an excellent initial adhesive strength.

As a method of grafting an ethylenically unsaturated carboxylic acid to a chloroprene polymer, an emulsion polymerization method is general in which the chloroprene polymer (latex) obtained by the aforementioned method and an ethylenically unsaturated carboxylic acid are mixed and the ethylenically unsaturated carboxylic acid is grafted to the chloroprene polymer in the presence of a radical polymerization initiator. Furthermore, a solution polymerization method can also be used in which an ethylenically unsaturated carboxylic acid is added to a solution obtained by dissolving a chloroprene polymer rubber, which is obtained by freeze-drying the chloroprene polymer (latex), in an organic solvent, and the ethylenically unsaturated carboxylic acid is grafted to the chloroprene polymer in the presence of a radical polymerization initiator. As a radical polymerization initiator, for example, potassium persulfate can be used.

The molar ratio of the content of oxygen atom with respect to the content of chlorine atom in the graft copolymer (the content of oxygen atom/the content of chlorine atom) is 0.04 to 1 (that is, the molar ratio of the chlorine atom and the oxygen atom in the graft copolymer is 1 : 0.04 to 1 : 1). The molar ratio of the chlorine atom and the oxygen atom indicates the molar ratio of the amount of the chlorine atom contained in the chloroprene polymer and the amount of the oxygen atom contained in the ethylenically unsaturated carboxylic acid and indicates the graft amount of the ethylenically unsaturated carboxylic acid in the graft copolymer. For example, in order to increase the content of oxygen atom, the amount of the ethylenically unsaturated carboxylic acid to be grafted or the polymerization time may be increased to increase the graft amount of the ethylenically unsaturated carboxylic acid with respect to the chloroprene polymer.

The content of the chlorine atom and the oxygen atom in the graft copolymer can be measured by the following method.

(1) A rubber latex is frozen at -60°C for 24 hours and then freeze-dried to obtain a dried product.
(2) 1.00 g of the aforementioned dried product is cut into a small piece having a size of 2 mm square (cubic shape with length 2 mm × width 2 mm × height 2 mm), the small piece is immersed in 100 mL of acetone to obtain an acetone solution, and then the acetone solution is stirred for 24 hours using a magnetic stirrer (for example, manufactured by AS ONE CORPORATION, CHPS-170DS, dimension: 175 mm × 178 mm). This operation (2) can be performed, for example, at 23°C.
(3) An insoluble matter in the acetone solution is collected by filtration and then dried (for example, is dried by leaving the insoluble matter to stand still in a vacuum dryer for 24 hours).
(4) The measurement is performed using a scanning electron microscope (for example, manufactured by Hitachi High-Technologies Corporation, SU6600) attached with an energy dispersive X-ray analyzer (for example, manufactured by Oxford Instruments, INCAx-act).

The molar ratio of the content of the oxygen atom with respect to the content of the chlorine atom in the graft copolymer is preferably 0.05 or more, 0.06 or more, 0.1 or more, 0.2 or more, 0.3 or more, 0.35 or more, 0.38 or more, 0.39 or more, 0.4 or more, 0.41 or more, 0.42 or more, 0.45 or more, 0.48 or more, 0.5 or more, 0.6 or more, 0.7 or more, or 0.8 or more, from the viewpoint of easily obtaining an excellent normal-state adhesive strength while obtaining an excellent initial adhesive strength. The molar ratio of the content of the oxygen atom with respect to the content of the chlorine atom in the graft copolymer is preferably 0.9 or less, 0.8 or less, 0.7 or less, 0.6 or less, 0.5 or less, 0.48 or less, 0.45 or less, 0.42 or less, 0.41 or less, 0.4 or less, 0.39 or less, 0.38 or less, 0.35 or less, 0.3 or less, 0.2 or less, 0.1 or less, or 0.06 or less, from the viewpoint of easily obtaining an excellent normal-state adhesive strength while obtaining an excellent initial adhesive strength.

The acetone soluble content in the graft copolymer as measured by the following (1) to (4) is preferably 3% by mass or less, 2% by mass or less, 1% by mass or less, or less than 1% by mass, from the viewpoint of easily obtaining an excellent normal-state adhesive strength while obtaining an excellent initial adhesive strength. The acetone soluble content may be 0% by mass, and may exceed 0 mass. The graft copolymer may contain an acetone soluble content as measured by the following (1) to (4) in a range of more than 0% by mass and 3% by mass or less.

(1) A rubber latex is frozen at -60°C for 24 hours and then freeze-dried to obtain a dried product.
(2) 1.00 g of the aforementioned dried product is cut into a small piece having a size of 2 mm square (cubic shape with length 2 mm × width 2 mm × height 2 mm), the small piece is immersed in 100 mL of acetone to obtain an acetone solution, and then the acetone solution is stirred for 24 hours using a magnetic stirrer (for example, manufactured by AS ONE CORPORATION, CHPS-170DS, dimension: 175 mm × 178 mm). This operation (2) can be performed, for example, at 23°C.
(3) An insoluble matter in the acetone solution is removed by filtration, the acetone solution is then concentrated and dried by an evaporator, and the mass (A) of the residue is measured (precisely weighed).
(4) An acetone soluble content is calculated by the following formula:

$$\text{Acetone soluble content} = \text{Mass (A) [g] of the residue}/\text{Mass 1.00 [g] of the dried product} \times 100$$

The aforementioned acetone soluble content can be used as an index of an amount of a polymer (such as a methacrylic acid homopolymer) obtained by polymerizing an ethylenically unsaturated carboxylic acid used when a graft copolymer is obtained, or the like. By adjusting the acetone soluble content in this range, the initial adhesive strength and the normal-state adhesive strength are likely to be improved.

(Surfactant)

The surfactant is not particularly limited, and examples thereof include polyvinyl alcohol; resin acid soaps such as rosin acid soap and disproportionated rosin acid soap; alkyl sulfuric acid salts such as sodium laurylsulfate; alkyl benzene sulfonic acid salts such as sodium dodecylbenzenesulfonate; alkylnaphthalenesulfonic acid salt; dialkylsulfosuccinic acid salts; polyoxyethylene alkyl ether sulfuric acid salt; salts of arylsulfonic acid formalin condensates such as a salt of β-naphthalene sulfonic acid formalin condensate; polyoxyethylene alkyl ethers such as polyoxyethylene lauryl ether; and polyoxyethylene alkyl phenyl ethers such as polyoxyethylene higher alcohol ether and polyoxyethylene nonylphenyl ether.

The content of the surfactant (surfactant amount) is preferably in the following range on the basis of the total amount of the rubber latex (in terms of solid content), from the viewpoint of improving the stability of the rubber latex. The content of the surfactant is preferably 0.5% by mass or more, 0.7% by mass or more, 0.8% by mass or more, 1% by mass or more, 1.2% by mass or more, 1.4% by mass or more, 1.5% by mass or more, 1.6% by mass or more, 1.8% by mass or more, or 2% by mass or more. The content of the surfactant is preferably 2.5% by mass or less, 2% by mass or less, 1.8% by mass or less, 1.6% by mass or less, 1.5% by mass or less, 1.4% by mass or less, 1.2% by mass or less, 1% by mass or less, 0.8% by mass or less, or 0.7% by mass or less. From these viewpoints, the content of the surfactant is preferably 0.5 to 2.5% by mass. The content of the surfactant can be measured by the method described in Examples.

The surfactant may be added after obtaining a graft copolymer by the aforementioned method, and can also be added at the time of polymerization of a chloroprene polymer (chloroprene polymerization step) or when a graft copolymer is obtained (graft polymerization step).

(Other components)

The rubber latex of the present embodiment can arbitrarily contain a tackifier resin, a thickener, an isocyanate, an ultraviolet absorber, an antioxidant, a plasticizer, a filler, a vulcanizing agent, a vulcanization accelerator, an antifoaming agent, a rust inhibitor, or the like, according to required performances. For example, the rubber latex of the present embodiment may contain a tackifier resin, a thickener, and an isocyanate.

[Tackifier resin]

The tackifier resin can be blended for improving an initial adhesive strength. The tackifier resin is not particularly limited, and examples thereof include a rosin resin, a polymerized rosin resin, an α-pinene resin, a β-pinene resin, a terpene phenol resin, a C5 petroleum resin, a C9 petroleum resin, a C5/C9 petroleum resin, a DCPD petroleum resin, an alkylphenol resin, a xylene resin, a coumarone resin, and a coumarone-indene resin.

A method of adding the tackifier resin is not particularly limited, and it is preferable to add after obtaining an emulsion for uniformly dispersing a resin in the rubber latex.

The content (addition amount) of the tackifier resin is preferably 20 to 80 parts by mass with respect to 100 parts by mass (in terms of solid content) of the rubber latex. By adjusting the content (addition amount) of the tackifier resin in this range, both the initial adhesive strength and the normal-state adhesive strength are likely to become satisfactory.

[Thickener]

The thickener can be blended for increasing the viscosity of the adhesive so as to improve coating properties or workability of the adhesive. The tackifier resin is not particularly limited, and examples thereof include a carboxymethyl cellulose (CMC) aqueous solution, a hydroxyl ethyl cellulose aqueous solution, polyvinyl alcohol, and a hydrophilic group-containing synthetic resin emulsion.

The content (addition amount) of the thickener is preferably 0.01 to 1.0 part by mass or 0.05 to 0.5 parts by mass with respect to 100 parts by mass (in terms of solid content) of the rubber latex. By adjusting the content (addition amount) of the thickener in this range, satisfactory temporal stability of the adhesive is likely to be obtained.

[Isocyanate]

The isocyanate can be blended for improving an adhesive strength. The isocyanate is not particularly limited, and examples thereof include methyl isocyanate, diphenylmethane diisocyanate, hexamethylene diisocyanate, and isophorone diisocyanate.

The content (addition amount) of the isocyanate is preferably 1 to 10 parts by mass or 2 to 5 parts by mass with respect to 100 parts by mass (in terms of solid content) of the rubber latex. By adjusting the content (addition amount) of the thickener in this range, a satisfactory adhesive strength is likely to be obtained.

<Water-based adhesive composition>

A water-based adhesive composition of the present embodiment is a water-based adhesive composition containing the rubber latex of the present embodiment, and is an embodiment in which the rubber latex of the present embodiment is a water-based adhesive (a water-based adhesive composition configured by the rubber latex of the present embodiment). The water-based adhesive composition of the present embodiment may not contain an organic solvent. The content of the organic solvent may be 1.0% by mass or less, 0.5% by mass or less, or 0.1% by mass or less, and may be 0% by mass, on the basis of the total mass of the water-based adhesive composition.

**Examples**

Hereinafter, the present invention will be described by means of Examples; however, these Examples do not limit the present invention.

<Example 1>

(Production of chloroprene latex A)

In a reactor vessel having an internal capacity of 10 L, 150 parts by mass of water, 4.0 parts by mass of sodium dodecylbenzenesulfonate (manufactured by Kao Corporation: NEOPELEX G-65 (purity: 65% by mass)), 0.7 parts by mass of sodium salt of naphthalene sulfonic acid formalin condensate (manufactured by Kao Corporation: DEMOL N), and 0.5 parts by mass of sodium bisulfite were put and then the solid content was dissolved to obtain a solution. Thereafter, 100 parts by mass of chloroprene and 0.55 parts by mass of 1-dodecanethiol were added to the solution while the solution was stirred. Polymerization was initiated using potassium persulfate as a polymerization initiator at 10°C under a nitrogen atmosphere. When the polymerization rate reached 75%, an emulsion containing 0.02 parts by mass of thiodiphenylamine was added to terminate the polymerization. The unreacted monomer was removed under reduced pressure to obtain a latex. A chloroprene latex A (mercaptan-modified) was obtained by adding water so as to adjust the solid content concentration (mass concentration) in the latex to 20% by mass. The solid content concentration in the chloroprene latex was calculated by a change in mass before and after drying when 2 g of the chloroprene latex was dried for 1 hour by a hot-air dryer set at 125°C.

(Production of graft copolymer rubber latex a)

While 100 parts by mass of the aforementioned chloroprene latex A was stirred, 0.5 parts by mass of methacrylic acid and 0.005 parts by mass of 1-dodecanethiol were added to this chloroprene latex A. Polymerization was initiated using potassium persulfate as a polymerization initiator at 40°C under a nitrogen atmosphere. Polymerization was ended when the polymerization rate reached 100%. Thereby, a graft copolymer rubber latex a was obtained.

<Example 2>

A graft copolymer rubber latex b was obtained in the same manner as in Example 1, except that, in Example 1, the used amount of methacrylic acid was changed to 4 parts by mass and the used amount of 1-dodecanethiol was changed to 0.04 parts by mass.

<Example 3>

A graft copolymer rubber latex c was obtained in the same manner as in Example 1, except that, in Example 1, the used amount of methacrylic acid was changed to 8 parts by mass and the used amount of 1-dodecanethiol was changed to 0.08 parts by mass.

<Example 4>

(Production of chloroprene latex B)

A chloroprene latex B (xanthogen-modified) was obtained in the same manner as in Example 1, except that, in Example 1, 0.55 parts by mass of 1-dodecanethiol was changed to 0.55 parts by mass of diethylxanthogen disulfide (manufactured by OUCHI SHINKO CHEMICAL INDUSTRIAL CO., LTD.).

(Production of graft copolymer rubber latex d)

While 100 parts by mass of the aforementioned chloroprene latex B was stirred, 4 parts by mass of methacrylic acid and 0.04 parts by mass of 1-dodecanethiol were added to this chloroprene latex B. Polymerization was initiated using potassium persulfate as a polymerization initiator at 40°C under a nitrogen atmosphere. Polymerization was ended when the polymerization rate reached 100%. Thereby, a graft copolymer rubber latex d was obtained.

<Example 5>

(Production of chloroprene latex C)

A chloroprene latex C (sulfur-modified) was obtained in the same manner as in Example 1, except that, in Example 1, 0.55 parts by mass of 1-dodecanethiol was changed to 0.55 parts by mass of sulfur.

(Production of graft copolymer rubber latex e)

While 100 parts by mass of the aforementioned chloroprene latex C was stirred, 4 parts by mass of methacrylic acid and 0.04 parts by mass of 1-dodecanethiol were added to this chloroprene latex C. Polymerization was initiated using potassium persulfate as a polymerization initiator at 40°C under a nitrogen atmosphere. Polymerization was ended when the polymerization rate reached 100%. Thereby, a graft copolymer rubber latex e was obtained.

<Example 6>

A graft copolymer rubber latex f was obtained in the same manner as in Example 2, except that, in Example 2, methacrylic acid was changed to acrylic acid.

<Example 7>

(Production of chloroprene latex D)

A chloroprene latex D (mercaptan-modified) was obtained in the same manner as in Example 1, except that, in Example 1, the used amount of sodium dodecylbenzenesulfonate (manufactured by Kao Corporation: NEOPELEX G-65 (purity: 65% by mass)) was changed from 4.0 parts by mass to 2.0 parts by mass.

(Production of graft copolymer rubber latex g)

While 100 parts by mass of the aforementioned chloroprene latex D was stirred, 4 parts by mass of methacrylic acid and 0.04 parts by mass of 1-dodecanethiol were added to this chloroprene latex D. Polymerization was initiated using potassium persulfate as a polymerization initiator at 40°C under a nitrogen atmosphere. Polymerization was ended when the polymerization rate reached 100%. Thereby, a graft copolymer rubber latex g was obtained.

<Example 8>

(Production of chloroprene latex E)

A chloroprene latex E (mercaptan-modified) was obtained in the same manner as in Example 1, except that, in Example 1, the used amount of sodium dodecylbenzenesulfonate (manufactured by Kao Corporation: NEOPELEX G-65 (purity: 65% by mass)) was changed from 4.0 parts by mass to 6.0 parts by mass.

(Production of graft copolymer rubber latex h)

While 100 parts by mass of the aforementioned chloroprene latex E was stirred, 4 parts by mass of methacrylic acid and 0.04 parts by mass of 1-dodecanethiol were added to this chloroprene latex E. Polymerization was initiated using potassium persulfate as a polymerization initiator at 40°C under a nitrogen atmosphere. Polymerization was ended when the polymerization rate reached 100%. Thereby, a graft copolymer rubber latex h was obtained.

<Example 9>

(Production of chloroprene latex F)

A chloroprene latex F was obtained in the same manner as in Example 1, except that, in Example 2, 4.0 parts by mass of sodium dodecylbenzenesulfonate (manufactured by Kao Corporation: NEOPELEX G-65 (purity: 65% by mass)) was changed to 4.0 parts by mass of polyvinyl alcohol (manufactured by Denka Company Limited: B-05).

(Production of graft copolymer rubber latex i)

While 100 parts by mass of the aforementioned chloroprene latex F was stirred, 4 parts by mass of methacrylic acid and 0.04 parts by mass of 1-dodecanethiol were added to this chloroprene latex F. Polymerization was initiated using potassium persulfate as a polymerization initiator at 40°C under a nitrogen atmosphere. Polymerization was ended when the polymerization rate reached 100%. Thereby, a graft copolymer rubber latex i was obtained.

<Example 10>

(Production of chloroprene latex G)

A chloroprene latex G (mercaptan-modified) was obtained in the same manner as in Example 2, except that, in Example 2, the polymerization initiation temperature was changed to 40°C.

(Production of graft copolymer rubber latex j)

While 100 parts by mass of the aforementioned chloroprene latex G was stirred, 4 parts by mass of methacrylic acid and 0.04 parts by mass of 1-dodecanethiol were added to this chloroprene latex G. Polymerization was initiated using potassium persulfate as a polymerization initiator at 40°C under a nitrogen atmosphere. Polymerization was ended when the polymerization rate reached 100%. Thereby, a graft copolymer rubber latex j was obtained.

<Comparative Example 1>

A graft copolymer rubber latex k was obtained in the same manner as in Example 1, except that, in Example 1, the used amount of methacrylic acid was changed to 0.3 parts by mass and the used amount of n-dodecylmercaptan was changed to 0.003 parts by mass.

<Comparative Example 2>

A graft copolymer rubber latex I was obtained in the same manner as in Example 1, except that, in Example 1, the used amount of methacrylic acid was changed to 12 parts by mass and the used amount of n-dodecylmercaptan was changed to 0.12 parts by mass.

<Comparative Example 3>

A rubber latex m, which was obtained by mixing water with a carboxyl group-modified chloroprene latex (manufactured by Denka Company Limited: LC-501) so as to adjust the solid content concentration to 20% by mass, was used.

<Comparative Example 4>

A chloroprene latex A was produced in the same manner as in Example 1. 4.0 parts by mass of polymethacrylic acid (PMA, manufactured by FUJIFILM Wako Pure Chemical Corporation) was added to 100 parts by mass of the obtained chloroprene latex A and then stirred at 25°C until the polymethacrylic acid was dissolved. Thereby, a rubber latex n was obtained.

<Evaluation of rubber latex>

(Molar ratio of chlorine atom/oxygen atom in polymer)

The aforementioned rubber latex was frozen at -60°C for 24 hours and then freeze-dried to obtain a dried product. 1.00 g of the dried product was cut into a cubic shape having a size of 2 mm square (length 2 mm $\times$ width 2 mm $\times$ height 2 mm) to obtain a small piece. The small piece was immersed (dispersed) in 100 mL of acetone at 23°C to obtain an acetone solution, and then the acetone solution was stirred for 1 hour using a magnetic stirrer (manufactured by AS ONE CORPORATION, CHPS-170DS, dimension: 175 mm $\times$ 178 mm).
An insoluble matter (polymer) in the acetone solution was collected by filtration and then dried by leaving the insoluble matter to stand still in a vacuum dryer for 24 hours. The measurement was performed using a scanning electron microscope (manufactured by Hitachi High-Technologies Corporation, SU6600) attached with an energy dispersive X-ray analyzer (manufactured by Oxford Instruments, INCAx-act), and the content of the chlorine atom and the oxygen atom in the polymer was quantified. Based on the measurement result, the molar ratio of the chlorine atom/the oxygen atom in the polymer was calculated. Results are presented in Table 1 and Table 2.

<Acetone soluble content>

The aforementioned rubber latex was frozen at -60°C for 24 hours and then freeze-dried to obtain a dried product. 1.00 g of the dried product was cut into a cubic shape having a size of 2 mm square (length 2 mm × width 2 mm × height 2 mm) to obtain a small piece. The small piece was immersed (dispersed) in 100 mL of acetone at 23°C to obtain an acetone solution, and then the acetone solution was stirred for 1 hour using a magnetic stirrer (manufactured by AS ONE CORPORATION, CHPS-170DS, dimension: 175 mm × 178 mm).
An insoluble matter (polymer) in the acetone solution was removed by filtration. The acetone solution was concentrated and dried by an evaporator, and then the mass (A) of the residue was measured (precisely weighed). The acetone soluble content was calculated by dividing the mass (A) of the residue by the mass of the dried product according to the following formula. Results are presented in Table 1 and Table 2.

$$\text{Acetone soluble content [\% by mass]} = \text{Mass (A) [g] of the residue/Mass}$$
$$\text{(1.00 [g]) of the dried product} \times 100$$

<Surfactant amount>

The aforementioned rubber latex was diluted 200-fold with pure water and then separated by centrifugation to obtain a supernatant, and 25 $\mu$L of the supernatant was subjected to quantitative analysis by liquid chromatography. The surfactant amount in the rubber latex was converted using a standard curve on the basis of the measurement value. Results are presented in Table 1 and Table 2.

<Polymerization rate>

The polymerization rate of the copolymer in the aforementioned rubber latex was calculated by the following formula. Note that the total charged amount of the monomer is regarded as 100 parts by mass, and the evaporation residue indicates the non-volatile component excluding the copolymer contained in the rubber latex.

$$\text{Polymerization rate [\%] of copolymer} = (\text{Total charged amount [parts by}$$
$$\text{mass] of monomer} \times \text{Solid content concentration [\% by mass]} - \text{Evaporation residue}$$
$$\text{[parts by mass]})/\text{Total charged amount [parts by mass] of monomer} \times 100$$

<Preparation of water-based adhesive composition>

With respect to 100 parts by mass (in terms of solid content) of each rubber latex of Examples 1 to 10 and Comparative Examples 1 to 4, 50 parts by mass of TAMANOL E-100 (manufactured by ARAKAWA CHEMICAL INDUSTRIES, LTD., 53% by mass of an emulsion of a terpene phenol resin) as a tackifier resin, 0.5 parts by mass of RM-8W (manufactured by Rohm & Haas Company, solid content: 17.5% by mass) as a thickener, and 2 parts by mass of TAKENATE WD-730 (manufactured by Mitsui Chemicals, Inc., water dispersible polyisocyanate) as an isocyanate were blended so as to obtain a water-based adhesive composition. The adhesive strength was evaluated by the following method using this water-based adhesive composition.

<Adhesive strength>

(Evaluation test of initial adhesive strength)

200 g (wet)/m$^2$ of the aforementioned water-based adhesive composition was applied to each of two vinyl chloride leather cloths (manufactured by Yamato Chemical Co. Ltd., Product name: 30 ester gray immersion, Product No.: Y321-715A, overlap portion size: width 20 mm × length 70 mm) by a brush. Drying was performed for 10 minutes under a 90°C atmosphere, and then the applied surfaces were laminated and pressure-bonded by a hand roller. After pressure-bonding, the leather cloth was left to stand still under an atmosphere at 23°C and 50% RH for 10 minutes, and a 180° peeling strength was measured at a tension rate of 200 mm/min using a tension tester. Results are presented in Table 1 and Table 2. A case where the vinyl chloride leather cloth as an adherend was broken was presented as "Material broken" in the tables.

(Evaluation test of normal-state adhesive strength)

200 g (wet)/m$^2$ of the aforementioned water-based adhesive composition was applied to each of two vinyl chloride leather cloths (manufactured by Yamato Chemical Co. Ltd., Product name: 30 ester gray immersion, Product No.: Y321-715A, overlap portion size: width 20 mm × length 70 mm) by a brush. Drying was performed for 10 minutes under a 90°C atmosphere, and then the applied surfaces were laminated and pressure-bonded by a hand roller. After pressure-bonding, the leather cloth was left to stand still under an atmosphere at 23°C and 50% RH for 5 days, and a 180° peeling strength was measured at a tension rate of 200 mm/min using a tension tester. Results are presented in Table 1 and Table 2. A case where the vinyl chloride leather cloth as an adherend was broken was presented as "Material broken" in the tables.

[Table 1]

| | | Unit | Example | | | | | | | | | |
|---|---|---|---|---|---|---|---|---|---|---|---|---|
| | | | 1 | 2 | 3 | 4 | 5 | 6 | 7 | 8 | 9 | 10 |
| Kind of graft copolymer rubber latex | | - | a | b | c | d | e | f | g | h | i | j |
| Structure of copolymer | | - | Graft | Graft | Graft | Graft | Graft | Graft | Graft | Graft | Graft | Graft |
| Chloroprene latex | A (mercaptan-modified) | Parts by mass | 100 | 100 | 100 | 0 | 0 | 100 | 0 | 100 | 100 | 0 |
| | B (xanthogen-modified) | Parts by mass | 0 | 0 | 0 | 100 | 0 | 0 | 0 | 0 | 0 | 0 |
| | C (sulfur-modified) | Parts by mass | 0 | 0 | 0 | 0 | 100 | 0 | 0 | 0 | 0 | 0 |
| | D (mercaptan-modified) | Parts by mass | 0 | 0 | 0 | 0 | 0 | 0 | 100 | 0 | 0 | 0 |
| | E (mercaptan-modified) | Parts by mass | 0 | 0 | 0 | 0 | 0 | 0 | 0 | 100 | 0 | 0 |
| | F (PVA) | Parts by mass | 0 | 0 | 0 | 0 | 0 | 0 | 0 | 0 | 100 | 0 |
| | G (mercaptan-modified) | Parts by mass | 0 | 0 | 0 | 0 | 0 | 0 | 0 | 0 | 0 | 100 |
| | Solid content concentration | % by mass | 20 | 20 | 20 | 20 | 20 | 20 | 20 | 20 | 20 | 20 |

(continued)

| | | Unit | Example | | | | | | | | | |
|---|---|---|---|---|---|---|---|---|---|---|---|---|
| | | | 1 | 2 | 3 | 4 | 5 | 6 | 7 | 8 | 9 | 10 |
| Graft polymerization | Methacrylic acid | Parts by mass | 0.5 | 4 | 8 | 4 | 4 | 0 | 4 | 4 | 4 | 4 |
| | Acrylic acid | Parts by mass | 0 | 0 | 0 | 0 | 0 | 4 | 0 | 0 | 0 | 0 |
| | 1-Dodecanethiol | Parts by mass | 0.005 | 0.04 | 0.08 | 0.04 | 0.04 | 0.04 | 0.04 | 0.04 | 0.04 | 0.04 |
| | Potassium persulfate | Parts by mass | 0.0005 | 0.004 | 0.008 | 0.004 | 0.004 | 0.004 | 0.004 | 0.004 | 0.004 | 0.004 |
| | Polymerization rate (calculated from solid content concentration) | % | 100 | 100 | 100 | 100 | 100 | 100 | 100 | 100 | 100 | 100 |
| Molar ratio of chlorine atom and oxygen atom in graft copolymer (chlorine atom : oxygen atom) | | - | 1 : 0.06 | 1 : 0.38 | 1 : 0.82 | 1 : 0.41 | 1 : 0.40 | 1 : 0.48 | 1 : 0.42 | 1 : 0.41 | 1 : 0.39 | 1 : 0.40 |
| Acetone soluble content | | % by mass | 1> | 1> | 1> | 1> | 1> | 1> | 1> | 1> | 1> | 1> |
| Surfactant amount | | % by mass | 1.6 | 1.5 | 1.4 | 1.5 | 1.5 | 1.4 | 0.7 | 2.5 | 1.5 | 1.4 |
| Initial adhesive strength | | N/mm | Material broken | Material broken | Material broken | Material broken | Material broken | Material broken | Material broken | Material broken | Material broken | Material broken |
| Normal-state adhesive strength | | N/mm | Material broken | Material broken | Material broken | Material broken | Material broken | Material broken | Material broken | Material broken | Material broken | Material broken |

EP 3 940 002 A1

[Table 2]

| | Unit | Comparative Example | | | |
|---|---|---|---|---|---|
| | | 1 | 2 | 3 | 4 |
| Kind of rubber latex | - | k | l | m | n |
| Structure or the like of polymer | - | Graft | Graft | Random | Mixture of CR latex and PMA |
| Chloroprene latex — A (mercaptan-modified) | Parts by mass | 100 | 100 | 0 | 100 |
| Chloroprene latex — LC-501 (carboxyl group-modified) | Parts by mass | 0 | 0 | 100 | 0 |
| Chloroprene latex — Solid content concentration | % by mass | 20 | 20 | 20 | 20 |
| Graft polymerization — Methacrylic acid | Parts by mass | 0.3 | 12 | - | - |
| Graft polymerization — 1-Dodecanethiol | Parts by mass | 0.003 | 0.12 | - | - |
| Graft polymerization — Potassium persulfate | Parts by mass | 0.0003 | 0.012 | - | - |
| Graft polymerization — Polymerization rate (calculated from solid content concentration) | % | 100 | 100 | - | - |
| Molar ratio of chlorine atom and oxygen atom in polymer (chlorine atom : oxygen atom) | - | 1: 0.03 | 1: 1.18 | 1: 0.05 | 1: 0.39 |
| Acetone soluble content | % by mass | 1> | 1> | 1> | 15 |
| Surfactant amount | % by mass | 1.6 | 1.3 | 1.2 | 1.5 |
| Initial adhesive strength | N/mm | 0.8 | 1.3 | 0.9 | 1.1 |
| Normal-state adhesive strength | N/mm | 1.1 | 1.5 | 1.2 | 1.4 |

Although not shown in the table, the aforementioned water-based adhesive compositions of Examples could be suitably used also in adhesion between a highly polar material such as a vinyl chloride leather cloth and a diene-based rubber sheet such as a natural rubber sheet and adhesion between natural rubber sheets (excluding the kinds of adherend, when performing the same evaluation test as the aforementioned evaluation tests of the initial adhesive strength and the normal-state adhesive strength, the result that the adherend was broken (the aforementioned "Material broken" result) was obtained).

**Claims**

1. A rubber latex comprising: a graft copolymer; and a surfactant, wherein

   the graft copolymer comprises a chloroprene polymer chain and a graft chain bonded to the chloroprene polymer chain,

the graft chain comprises a structural unit derived from an ethylenically unsaturated carboxylic acid, and a molar ratio of a content of oxygen atom with respect to a content of chlorine atom in the graft copolymer is 0.04 to 1.

2. The rubber latex according to claim 1, wherein the ethylenically unsaturated carboxylic acid comprises at least one selected from the group consisting of acrylic acid and methacrylic acid.

3. The rubber latex according to claim 1 or 2, wherein an acetone soluble content in the graft copolymer as measured by the following (1) to (4) is 3% by mass or less:

   (1) a rubber latex is frozen at -60°C for 24 hours and then freeze-dried to obtain a dried product;
   (2) 1.00 g of the dried product is cut into a small piece having a size of 2 mm square, the small piece is immersed in 100 mL of acetone to obtain an acetone solution, and then the acetone solution is stirred for 24 hours using a magnetic stirrer;
   (3) an insoluble matter in the acetone solution is removed by filtration, the acetone solution is then concentrated and dried by an evaporator, and the mass of a residue is measured; and
   (4) an acetone soluble content is calculated by the following formula:

   $$\text{Acetone soluble content} = \text{Mass [g] of the residue} / \text{Mass } 1.00 \text{ [g] of the dried product} \times 100$$

4. The rubber latex according to any one of claims 1 to 3, further comprising a tackifier resin, a thickener, and an isocyanate.

5. A water-based adhesive composition comprising the rubber latex according to any one of claims 1 to 4.

<div align="center">

**INTERNATIONAL SEARCH REPORT**

</div>

| International application No. |
| --- |
| PCT/JP2020/010650 |

**A. CLASSIFICATION OF SUBJECT MATTER**
Int.Cl. C08C2/06(2006.01)i, C08F279/02(2006.01)i, C09J11/06(2006.01)i,
C08K5/29(2006.01)i, C08L11/02(2006.01)i, C08L51/06(2006.01)i,
C08L101/00(2006.01)i, C09J111/02(2006.01)i, C09J151/06(2006.01)i
FI: C08F279/02, C09J151/06, C09J11/06, C08C2/06, C08L51/06, C08L11/02,
C08K5/29, C08L101/00, C09J111/02
According to International Patent Classification (IPC) or to both national classification and IPC

**B. FIELDS SEARCHED**

Minimum documentation searched (classification system followed by classification symbols)
Int.Cl. C08C2/06, C08F279/02, C09J11/06, C08K5/29, C08L11/02, C08L51/06,
C08L101/00, C09J111/02, C09J151/06

Documentation searched other than minimum documentation to the extent that such documents are included in the fields searched
Published examined utility model applications of Japan   1922–1996
Published unexamined utility model applications of Japan   1971–2020
Registered utility model specifications of Japan   1996–2020
Published registered utility model applications of Japan   1994–2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 2014-152183 A (DENKI KAGAKU KOGYO KK)<br>25.08.2014 (2014-08-25), claims, particularly,<br>claim 3, examples | 1-3, 5<br>4 |
| X<br>Y | JP 58-89602 A (TOYO SODA MFG CO., LTD.) 28.05.1983<br>(1983-05-28), claims, examples | 1-3, 5<br>4 |
| X<br>Y | JP 59-210917 A (TOYO SODA MFG CO., LTD.)<br>29.11.1984 (1984-11-29), claims, examples | 1-3, 5<br>4 |
| X<br>Y | JP 5-70509 A (BAYER AG) 23.03.1993 (1993-03-23),<br>claims, example 12 | 1-3, 5<br>4 |

☒ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13.05.2020 | 26.05.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2020/010650

C (Continuation).    DOCUMENTS CONSIDERED TO BE RELEVANT

| Category* | Citation of document, with indication, where appropriate, of the relevant passages | Relevant to claim No. |
|---|---|---|
| X | JP 2016-525164 A (SKINPROTECT CORPORATION SDN BHD) 22.08.2016 (2016-08-22), claims, examples | 1-3 |
| Y | WO 2018/143159 A1 (DENKA CO., LTD.) 09.08.2018 (2018-08-09), claim 4 | 4 |

Form PCT/ISA/210 (second sheet) (January 2015)

| INTERNATIONAL SEARCH REPORT | International application No. |
|---|---|
| Information on patent family members | PCT/JP2020/010650 |

| | | |
|---|---|---|
| JP 2014-152183 A | 25.08.2014 | (Family: none) |
| JP 58-89602 A | 28.05.1983 | (Family: none) |
| JP 59-210917 A | 29.11.1984 | (Family: none) |
| JP 5-70509 A | 23.03.1993 | EP 495365 A1<br>claims, example 12<br>DE 4101372 A<br>CA 2059425 A |
| JP 2016-525164 A | 22.08.2016 | US 2016/0159992 A1<br>claims, examples<br>WO 2015/006808 A1<br>EP 3022029 A2<br>TW 201514232 A<br>CA 2918437 A<br>CN 105492179 A |
| WO 2018/143159 A1 | 09.08.2018 | EP 3578600 A2<br>claim 4<br>CN 110198979 A<br>KR 10-2019-0112098 A |

Form PCT/ISA/210 (patent family annex) (January 2015)

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2127491 A
- JP H4323292 A
- JP H10273587 A
- JP H5320601 A